# FASCICULE DE BREVET EUROPEEN

(11) **EP 0 829 071 B1**
(45) Date de publication et mention de la délivrance du brevet: **15.09.1999**
(21) Numéro de dépôt: 96918723.6
(22) Date de dépôt: 28.05.1996
(51) Int. Cl.: G07F 7/10, G06K 7/00

(54) **SYSTEME A CARTES A PUCE INTELLIGENTES**
SYSTEM MIT INTELLIGENTEN CHIPKARTEN
SMART CARD SYSTEM

(30) Priorité: 30.05.1995 FR 9506371
(43) Date de publication de la demande: 18.03.1998
(73) Titulaire: SYSECA S.A., 92240 Malakoff (FR)
(72) Inventeur: CESAIRE, Gérard, F-92402 Courbevoie Cédex (FR); DEVAUX, François, F-92402 Courbevoie Cédex (FR); GERARD, Yves, F-92402 Courbevoie Cédex (FR)
(74) Mandataire: Beylot, Jacques
(86) Numéro de dépôt international: FR9600797
(87) Numéro de publication internationale: WO9638826

(56) Documents cités:
- EP-A- 0 193 920
- EP-A- 0 490 455
- EP-A- 0 662 674
- FR-A- 2 635 598
- GB-A- 2 274 523
- US-A- 5 036 461

## Description

On désigne par carte à puce, les cartes, en général du format d'une carte de crédit, mais également les jetons munis d'un microcircuit électronique, à base de mémoires et d'un microcontrôleur, agencés pour permettre le déroulement d'une transaction par exemple bancaire ou santé.

La présente invention est relative à un système formé par une carte à puce et un lecteur de carte à puce qui permet d'exécuter la transaction à laquelle est dédiée la carte à puce.

Les systèmes connus à cartes à puce et lecteur comportent d'une part des cartes à puce dotées de mémoires et éventuellement d'un microcontrôleur, et utilisées uniquement comme support de données agrémenté de moyens de sécurisation et, d'autre part, des lecteurs de carte à puce pourvus d'une intelligence suffisante pour contrôler le déroulement de la transaction envisagée.

Les lecteurs de carte à puce sont équipés d'un système assurant une liaison avec une carte à puce soit au moyen d'un connecteur électrique à broche multiple, soit au moyen d'une antenne capacitive ou inductive. Ils peuvent être autonomes et se suffire à eux mêmes ou transparents et servir d'accès à un système informatique. Lorsqu'ils sont autonomes, ils comportent des éléments de communication suffisants pour permettre à une personne de suivre les étapes d'une transaction : clavier et afficheur qui sont gérés, de même que la liaison avec la carte à puce, par un microcontrôleur propre au lecteur doté d'un programme d'application spécifique de la transaction envisagée. Lorsqu'ils sont transparents, ils se comportent comme un simple port d'entrée-sortie, spécialisé pour une carte à puce, vis à vis d'un système informatique programmé spécialement pour la transaction envisagée. Dans les deux cas, ils transmettent à la carte à puce des instructions mises sous une forme respectant un protocole d'échange spécifique qui est souvent celui défini dans la norme IS07816-3, et la carte à puce se contente d'exécuter ces instructions et de rendre compte.

L'intelligence de la transaction est située soit au niveau du lecteur, soit à celui du système informatique associé au lecteur. Cela a pour inconvénient de nécessiter une spécialisation du lecteur ou du système informatique associé en fonction du type de transaction. Ainsi, si l'on veut changer de type de transaction, il ne suffit pas de changer la programmation de la carte à puce. Il faut également changer la programmation du lecteur, s'il est autonome, ou celle du système informatique associé, si le lecteur est transparent. Cela est un obstacle au développement des applications des cartes à puce.

Pour éviter cet inconvénient, il a été proposé de ramener l'intelligence, c'est-à-dire la gestion de la transaction, au niveau de la carte à puce elle même qui alors stocke en mémoire le programme de gestion de la transaction et le fait exécuter.

Le lecteur devient alors un organe extérieur dont la fonction principale est de fournir les ressources nécessaires à la réalisation de la transaction et notamment de mettre à disposition de la carte à puce des interfaces tels que clavier, afficheur, liaison asynchrone et moyen de liaison à une autre carte à puce ou à un système informatique.

Il se pose alors le problème de faire parvenir au lecteur certaines instructions à effectuer en relation avec le programme de gestion de la transaction stocké en mémoire dans la carte à puce et déroulé par celle-ci.

Pour résoudre ce problème, il est connu, par exemple par la demande européenne de brevet EP-A-0 490 455, de définir un protocole de communication entre carte à puce et lecteur de carte à puce utilisant un petit nombre de commandes spécifiques de certaines actions demandées au lecteur par une carte à puce, et de requêtes et réponses de la part du lecteur compatibles avec ces commandes, ayant des caractéristiques assez générales pour convenir à différentes sortes de cartes à puce et de lecteurs. Cette solution présente cependant l'inconvénient de limiter à un cadre assez étroit dû à la spécificité des commandes, requêtes et réponses, les possibilités et la nature des échanges entre une carte à puce et son lecteur. Elle a aussi l'inconvénient de ne plus respecter les normes existantes sur la gestion des communications entre une carte à puce et un lecteur de carte à puce et par conséquent d'être incompatible avec la génération précédente de cartes à puce.

La présente invention a pour but un protocole de communication entre une carte à puce intelligente et un lecteur de carte à puce qui impose le moins possible de limitation aux échanges entre une carte à puce et son lecteur afin d'éviter une spécialisation du lecteur de carte à puce à un type particulier de carte à puce, et qui soit facile à mettre en accord avec les normes existant sur la gestion des communications entre une carte à puce et son lecteur.

Elle a pour objet un système pour cartes à puce intelligentes comportant au moins un lecteur de carte à puce pourvu de moyens d'alimentation de carte à puce activés par la connexion d'une carte à puce et une carte à puce stockant en mémoire un programme de gestion de transaction. Ce système est remarquable en ce que le lecteur de carte à puce comporte :
- des moyens engendrant de manière alternative et répétitive, à destination d'une carte à puce raccordée, d'une part une requête de mise à disposition d'un paquet d'instructions et de données élaborées au sein de ladite carte à puce dit "message carte" et, d'autre part, une déclaration de compte rendu associée à un message de compte rendu sur l'exécution, par le lecteur, d'instructions reçues précédemment dans des messages carte de ladite carte à puce, la déclaration de compte rendu et le message de compte rendu étant dits "compte rendu lecteur",
- des moyens de réception et de traitement du message carte délivré par ladite carte à puce à la suite d'une requête de mise à disposition d'un message carte, et
- des moyens d'élaboration et de transmission de messages de compte rendu lecteur à la suite d'une exécution d'instructions reçues de ladite carte à puce dans des messages carte,
et en ce que ladite carte à puce comporte :
- des moyens d'initialisation activés à la mise sous tension de ladite carte à puce provoquant la mise à disposition dudit lecteur d'un premier message carte,
- des moyens de reconnaissance d'une requête de mise à disposition d'un message carte émanant dudit lecteur et de transmission de message carte à destination dudit lecteur en réponse à une telle requête de mise à disposition d'un message carte,
- des moyens de reconnaissance d'une déclaration de compte rendu et de traitement du message de compte rendu associé en provenance dudit lecteur, et
- des moyens d'exécution dudit programme de gestion de transaction élaborant les instructions et données des messages carte au rythme des requêtes de mise à disposition de message carte et des déclarations de compte rendu émises par ledit lecteur.

Avantageusement, une requête de mise à disposition d'un message carte émanant du lecteur de carte à puce consiste en une commande du type "get response" normalement utilisée dans les normes ISO7816/prEN726 pour adresser, au lecteur, des données préparées, tandis qu'une déclaration de compte rendu émanant du lecteur consiste en une commande du type "enveloppe" ou "execute" normalement utilisée dans les normes ISO7816/prEN726 pour envoyer des données ou faire exécuter un programme au sein d'une carte à puce.

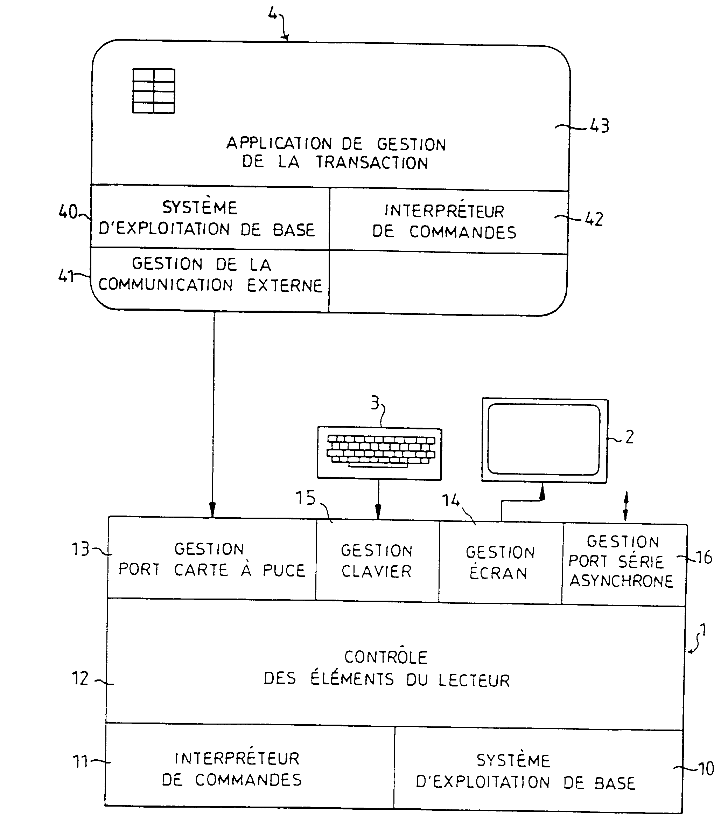

D'autres caractéristiques et avantages de l'invention ressortiront de la description ci-après d'un mode de réalisation de l'invention, donné à titre d'exemple. Cette description sera faite en regard du dessin dans lequel la figure unique illustre, de manière schématique, les différentes couches logiques des programmes d'une carte à puce intelligente et du lecteur associé d'un système selon l'invention.

On distingue sur cette figure les grandes partitions des programmes de gestion des microcontrôleurs d'un lecteur 1 de carte à puce équipé avec un écran d'affichage 2 et un clavier 3, et d'une carte à puce intelligente 4.

Pour le lecteur 1, la couche la plus enfouie de son programme d'exploitation est un système d'exploitation de base 10, en code exécutable, adapté au type du microcontrôleur, qui gère sa mémoire. Ce système d'exploitation de base 10 est associé à un interpréteur de commandes 11 reconnaissant les différentes instructions en langage évolué susceptibles de se trouver dans un message carte. L'ensemble est surmonté d'une couche intercalaire constituée d'un programme de contrôle 12 assurant la maîtrise des divers éléments du lecteur et d'une couche externe constituée de divers programmes de gestion de périphériques dont un programme 13 de gestion de communication avec une carte à puce selon la norme ISO7816-3, un programme 14 de gestion d'écran d'affichage, un programme 15 de gestion de clavier et un programme 16 de gestion de port série asynchrone pour une éventuelle liaison avec un système informatique déporté. Le programme de contrôle 12 assure l'aiguillage des ordres provenant des messages carte vers l'interpréteur de commandes 11, la constitution des messages de compte rendu à destination de la carte à puce, l'élaboration de la succession des requêtes de mise à disposition de messages carte et des déclarations de compte rendu à destination de la carte à puce, et l'interface entre le système d'exploitation de base et les différents programmes de gestion des périphériques.

Pour la carte à puce intelligente 4, la couche la plus enfouie de son programme d'exploitation est encore un système d'exploitation de base 40, en code exécutable, adapté au type de microcontrôleur, qui gère sa mémoire, avec les systèmes habituels de sécurisation d'une carte à puce, et un protocole de communication externe 41. Ce système d'exploitation de base 40 est associé à un interpréteur de commandes 42 résidant en mémoire ROM et reconnaissant des ordres en langage évolué . L'ensemble du système d'exploitation de base 40 et de l'interpréteur de commandes 42 est surmonté par une couche externe constituée d'un programme en langage évolué 43 de gestion de la transaction à laquelle est dédiée la carte à puce, qui est stocké en mémoire EEPROM.

Le lecteur 1 communique avec la carte à puce intelligente 4 au moyen d'une liaison à alternat grâce à une succession de cycles de deux commandes successives des normes ISO7816/prEN726 qui sont la commande "get response" et la commande "enveloppe" ou "execute".

La commande "get-response" est constituée par l'envoi du message binaire comprenant cinq champs successifs de un octet:
- un premier champ nommé "CLA" renfermant un octet identifiant la classe de l'instruction, par exemple instructions réservées aux applications bancaires,
- un deuxième champ nommé "INS" renfermant l'octet C0 en hexadécimal identifiant le type de commande "get response",
- un troisième champ réservé nommé "P1" renfermant l'octet 00 en hexadécimal,
- un quatrième champ réservé nommé "P2" renfermant l'octet 00 en hexadécimal, et
- un cinquième champ nommé "Le field" renfermant un octet dont la valeur n correspond au nombre d'octets attendus en réponse de la carte à puce.

Cette commande "get response" entraîne une réponse de la carte à puce dite "Data field" renfermant n octets de données, n étant le nombre déclaré dans son champ "Le field", et deux octets "SW1, SW2" donnant un compte rendu carte.

La commande "execute" est constituée par l'envoi du message binaire constitué de cinq champs successifs de un octet et d'un champ final de données de plusieurs octets :
- un premier champ nommé "CLA" renfermant un octet identifiant la classe de l'instruction, par exemple instructions réservées aux applications bancaires,
- un deuxième champ nommé "INS" renfermant l'octet AE en hexadécimal identifiant le type de commande "execute",
- un troisième champ réservé nommé "P1" renfermant l'octet 00 en hexadécimal,
- un quatrième champ réservé nommé "P2" renfermant l'octet 00 en hexadécimal,
- un cinquième champ nommé "Lc field" renfermant un octet dont la valeur n correspond au nombre d'octets du message accompagnant la commande "execute", et
- un sixième champ final nommé "Data field" renfermant les n octets de données annoncés dans le cinquième champ "Lc field". Cette commande "execute" entraîne une réponse de la carte à puce de deux octets "SW1, SW2" donnant un compte rendu carte.

La commande "enveloppe" a la même constitution que la commande "execute" et s'en différencie par la valeur de l'octet de son deuxième champ "INS" identifiant la commande qui vaut C2 en hexadécimal.

Dans ces trois messages les champs respectifs "Le field" et "Lc field" déclarent la longueur du message carte attendu ou celle du message compte rendu du lecteur au moyen desquels transitent les instructions à exécuter et données associées en provenance de la carte à puce ainsi qu'en retour les comptes-rendus des actions exécutées par le lecteur et données résultantes.

A l'introduction de la carte à puce 4 dans le lecteur 1, la carte à puce se trouve détectée et mise sous tension par le lecteur 1 qui lui envoie un ordre de remise à zéro selon la norme ISO7816-3. Il en résulte un processus d'initialisation du microcontrôleur de la carte à puce 4 qui se termine par l'envoie au lecteur 1, depuis la carte à puce 4, d'une réponse d'acquittement à l'ordre de remise à zéro et par une mise en route du programme de gestion de transaction de la carte à puce 4 pour un premier cycle de traitement aboutissant dans cette dernière à la préparation du premier message carte qui pourra être communiqué au lecteur 1 dès que celui-ci en fera la demande au travers d'une requête de mise à disposition de message sous la forme d'une commande "get response".

A la réception de la réponse d'acquittement à l'ordre de remise à zéro, le lecteur 1 entame un premier cycle d'échange de données avec la carte à puce 4.

Au cours de ce premier cycle d'échange, le lecteur 1 envoie en direction de la carte à puce 4 une requête de mise à disposition de message sous la forme d'une commande "get response" pour demander l'envoi du message carte préparé par la carte à puce 4 après son initialisation.

La carte à puce 4, à la réception d'une telle requête par la commande "get response" envoie le message carte préparé au lecteur 1.

Le lecteur 1 reçoit le message carte, identifie les données qu'il contient, interprète le message, exécute les commandes demandées et répond à la carte à puce 4 par une déclaration de compte rendu sous la forme d'une commande "enveloppe" ou "execute", avec un message de compte rendu, rapportant à la carte à puce 4 la façon dont il a réalisé ce qui lui a été demandé et le résultat de ce traitement. Cela termine le premier cycle d'échange.

A la réception de la commande "enveloppe" ou "execute" du premier cycle d'échange en provenance du lecteur 1, la carte à puce 4 poursuit le déroulement de son programme de gestion de transaction au cours d'un deuxième cycle de traitement pendant lequel elle vérifie d'abord l'exécution correcte du message carte qu'elle vient d'émettre, au moyen du message de compte rendu, puis prépare un autre message carte.

Le lecteur 1 entame ensuite un deuxième cycle d'échange en envoyant à la carte à puce 4 une deuxième commande "get response" pour lire le nouveau message carte. Après traitement des données de ce nouveau message carte, le lecteur 1 rend compte de son exécution à la carte à puce 4, au moyen d'un message de compte rendu incorporé à une deuxième commande "enveloppe" ou "execute" qui clôt le deuxième cycle d'échange.

La carte à puce 4, à la réception de cette deuxième commande "enveloppe" ou "execute" en provenance du lecteur 1, entame alors, toujours sous le contrôle de son programme de gestion de transaction, un troisième cycle de traitement au cours duquel elle vérifie l'exécution correcte du message carte qu'elle vient d'émettre, au moyen du message de compte rendu reçu du lecteur 1, puis prépare un autre message carte.

Le lecteur 1 entame alors un troisième cycle d'échange en envoyant à la carte à puce 4 une troisième commande "get response" pour recevoir ce message carte.

Les cycles de traitement, à l'initiative de la carte à puce 4, et d'échange, à l'initiative du lecteur 1, se succèdent ainsi en fonction du programme de gestion de la transaction stocké dans la carte à puce 4.

Conformément à la norme ISO7816-3 le lecteur 1 est électriquement maître des échanges, mais le déroulement de la transaction se fait à l'initiative de la carte à puce 4 qui est intelligente.

Dans le cas où le système comporte plusieurs cartes à puce, une seule carte à la fois pilote la transaction. La carte à puce qui pilote la transaction est dite "active". Les autres sont dites "passives". La carte à puce déclarée active est la première qui est capable de fournir une réponse à une instruction "get response" du lecteur.

Comme cela a été mentionné précédemment, la commande "get response" est utilisée par le lecteur pour demander à la carte à puce qui a été déclarée "active", les types d'opération qu'il doit effectuer au cours d'une transaction.

Les types d'opérations qu'une carte à puce active peut demander au lecteur peuvent être assez divers. Parmi eux, on peut citer :
- une demande de la configuration du lecteur auquel le lecteur retourne un compte rendu résumant ses principales caractéristiques,
- un arrêt/relance du lecteur auquel le lecteur retourne un compte rendu donnant son état de fonctionnement,
- une installation d'un programme dans le lecteur grâce à des paramètres d'appel, contenus dans des messages carte, tels que: nom du programme, longueur et contenu du programme. A cette installation, le lecteur retourne un compte rendu sur son état et les données de l'installation effectuée.
- une exécution d'un programme installé grâce à des paramètres d'appel, contenus dans des messages carte, tels que: nom du programme, longueur des données, données d'appel du programme. A cette exécution, le lecteur retourne un compte rendu sur son état et la longueur des données en retour.
- une demande d'ouverture/fermeture de liaison asynchrone grâce à des paramètres d'appel, contenus dans des messages carte, tels que : numéro du port, identifiant du correspondant, sens. A cette demande le lecteur retourne un compte rendu sur l'état et le numéro du port concerné.
- une demande de visualisation d'un message opérateur grâce à des paramètres d'appel, contenus dans des messages carte, tels que : type de message (permanent, à acquitter,...), type de visualisation (fixe, clignotant,...), nombre d'éléments du message, coordonnées de chaque élément du message, longueur du libellé, libellé. A cette demande, le lecteur retourne un compte rendu d'état.
- une demande de sélection dans un menu grâce à des paramètres d'appel, contenus dans des messages carte, tels que: type de menu, nombre de lignes du menu, nom de la ligne, coordonnées de chacun des choix, libellé. A cette demande, le lecteur retourne un compte rendu indiquant le numéro de la ligne sélectionnée.
- une demande de saisie dans une grille grâce à des paramètres d'appel, contenus dans des messages carte, tels que : nom de la grille, type de la grille (initiale, enchaînement,...), nombre de questions, coordonnées du libellé de chaque question, coordonnée de chaque réponse, nombre maximum de caractères à saisir, type de champ (saisie obligatoire, non visualisé, non modifiable,...), longueur du libellé de la question, libellé de la question, nombre de caractères de la valeur par défaut de la réponse, valeur par défaut de la réponse (absente si la longueur vaut zéro). A cette demande, le lecteur retourne un compte rendu comportant soit :
   - le nom de la grille, le numéro d'une question et une demande d'action complémentaire ou une valeur saisie,
   - un abandon,
   - le nom de la grille, une validation, la date et l'heure,
- une écriture dans un fichier du lecteur grâce à des paramètres d'appel, contenus dans des messages carte, tels que: nom du fichier, adresse dans le fichier, longueur des données à écrire et les données à écrire elles-mêmes. A cette demande, le lecteur retourne un compte rendu donnant l'état et le nom du fichier.
- une demande d'authentification externe avec en retour un compte rendu donnant la preuve de la validité du lecteur,
- un échange de données chiffrées/déchiffrées grâce à des paramètres d'appel, contenus dans des messages carte, tels que: longueur des données chiffrées/déchiffrées et données chiffrées/déchiffrées, avec un compte rendu en retour du lecteur donnant le numéro de clef, la longueur des données et les données elles-mêmes,
- une demande de signature d'un fichier grâce à des paramètres d'appel, contenus dans des messages carte, tels que: le nom du fichier, avec en retour un compte rendu du lecteur donnant la signature demandée,
- une demande d'exécution d'une commande pour carte à puce passive grâce à des paramètres d'appel, contenus dans des messages carte, constitués de commandes au format carte passive selon la norme IS07816-4, avec un compte rendu en retour donnant un état, la longueur des données en retour et les données en retour,
- une demande d'exécution d'une commande "standard" du lecteur grâce à des paramètres d'appel contenus dans des messages carte , avec un compte rendu lecteur.

On entend par commande "standard" lecteur, toute commande exécutable par le système d'exploitation du lecteur. Les commandes "standard" comprennent en particulier :
- une demande de création/destruction de répertoire dans la mémoire du lecteur,
- une demande de sélection d'un répertoire dans la mémoire du lecteur,
- une demande de lecture du contenu d'un répertoire du lecteur,
- une demande de création/destruction de fichiers dans le répertoire courant du lecteur,
- une demande de copie/sauvegarde/restauration de fichiers du lecteur vers un port de communication (carte à puce ou asynchrone),
- une demande de lancement d'un fichier exécutable,
- une installation d'un programme dans l'application lecteur à partir d'un fichier du lecteur,
- une demande d'impression si le lecteur est muni ou connecté à une imprimante,
- une demande de la date et de l'heure,
- .......

En outre le lecteur peut signaler lui-même certains événement externes :
- demande de connexion d'une liaison asynchrone (n° du port, identifiant du demandeur),
- insertion d'une carte (n° de la carte insérée, ATR),
- retrait d'une carte (n° de la carte extraite),
- inactivité du clavier,
- .....

## Revendications

1. Système pour cartes à puce intelligentes comportant au moins un lecteur (1) de carte à puce pourvu de moyens d'alimentation de carte à puce activés par la connexion d'une carte à puce et une carte à puce (4) stockant en mémoire un programme de gestion de transaction (43), le lecteur (1) de carte à puce comportant :
- des moyens engendrant de manière alternative et répétitive, à destination d'une carte à puce (4) raccordée, d'une part une requête de mise à disposition d'un paquet d'instructions et de données élaborées au sein de ladite carte à puce (4) dit "message carte" et, d'autre part, une déclaration de compte rendu associée à un message de compte rendu sur l'exécution, par le lecteur (1), d'instructions reçues précédemment dans des messages carte de ladite carte à puce (4), la déclaration de compte rendu et le message de compte rendu étant dits "compte rendu lecteur",
- des moyens de réception et de traitement du message carte délivré par ladite carte à puce (4) à la suite d'une requête de mise à disposition d'un message carte, et
- des moyens d'élaboration et de transmission de messages de compte rendu lecteur à la suite d'une exécution d'instructions reçues de ladite carte à puce (4) dans des messages carte,
et ladite carte à puce (4) comportant :
- des moyens d'initialisation activés à la mise sous tension de ladite carte à puce (4) provoquant la mise à disposition dudit lecteur (1) d'un premier message carte,
- des moyens de reconnaissance d'une requête de mise à disposition d'un message carte émanant dudit lecteur (1) et de transmission de message carte à destination dudit lecteur (1) en réponse à une telle requête de mise à disposition d'un message carte,
- des moyens de reconnaissance d'une déclaration de compte rendu et de traitement du message de compte rendu associé en provenance dudit lecteur (1), et
- des moyens d'exécution dudit programme de gestion de transaction élaborant les instructions et données des messages carte au rythme des requêtes de mise à disposition de message carte et des déclarations de compte rendu émises par ledit lecteur (1).

2. Système selon la revendication 1, caractérisé en ce que les moyens d'exécution dudit programme de gestion de transaction élaborent des instructions de :
- demande de visualisation d'un message destiné à un opérateur,
- demande de sélection d'un menu,
- demande de saisie d'une grille,
- demande de visualisation d'une grille ou d'un champ,
- demande d'exécution d'une commande par les moyens de réception et de traitement de message carte du lecteur (1),
- demande d'enregistrement de fichier,
- demande d'authentification externe,
- demande de chiffrement,
- demande de déchiffrement,
- demande de signature d'un fichier,
- demande d'installation d'un programme,
- demande d'exécution d'un programme précédemment installé

3. Système selon la revendication 1, caractérisé en ce que lesdits moyens d'élaboration de message de compte rendu dudit lecteur (1) élaborent des messages de compte rendu sur :
- une sélection d'un menu,
- une saisie d'un champ,
- une réponse à une demande d'exécution d'une commande par les moyens de réception et de traitement de message carte du lecteur (1),
- une insertion d'une carte à puce (4) dans le lecteur (1),
- un retrait d'une carte à puce (4) du lecteur (1),
- une inactivité du clavier,
- une authentification du lecteur (1)
- une demande de déchiffrement,
- un compte rendu d'installation,
- une demande d'une liaison asynchrone.

4. Système selon la revendication 1, caractérisé en ce que les moyens dudit lecteur (1) engendrant de manière altemative et répétitive une requête de mise à disposition d'un message carte et une déclaration de compte rendu associée à un message de compte rendu de la part du lecteur (1) élabore une requête de mise à disposition de message carte sous la forme d'un train numérique comportant plusieurs champs successifs dont un champ d'identification de commande et un champ de déclaration de la longueur du message carte attendu.

5. Système selon la revendication 1, caractérisé en ce que les moyens dudit lecteur (1) engendrant de manière alternative et répétitive une requête de mise à disposition d'un message carte et une déclaration de compte rendu associée à un message de compte rendu de la part du lecteur (1) élabore une déclaration de compte rendu sous la forme d'un train numérique comportant plusieurs champs successifs dont un champ d'identification de commande et un champ de déclaration de la longueur du message de compte rendu associé.

## Patentansprüche

1. System für intelligente Chipkarten, mit mindestens einem Chipkartenleser (1), der Mittel zur Stromversorgung einer Chipkarte besitzt, welche bei Anschluß einer Chipkarte aktiviert werden, und mit einer Chipkarte (4), die ein Transaktionsbearbeitungsprogramm (43) gespeichert enthält, wobei der Chipkartenleser (1) aufweist:
- Mittel, um alternativ und wiederholt an eine angeschlossene Chipkarte (4) einerseits eine Anfrage zur Zurverfügungstellung eines Pakets von Befehlen und Daten, die in der Chipkarte (4) erarbeitet wurden, Kartenmeldung genannt, und andrerseits eine Bestätigung zu richten, die mit einer Bestätigungsmeldung über die Ausführung von vorher in Kartenmeldungen der Chipkarte (4) empfangenen Befehlen durch den Kartenleser (1) verbunden ist, wobei die Bestätigungserklärung und die Bestätigungsmeldung als Bestätigung des Kartenlesers bezeichnet werden,
- Mittel zum Empfang und zur Verarbeitung der von der Chipkarte (4) nach einer Anfrage zur Zurverfügungstellung einer Kartenmeldung gelieferten Kartenmeldung,
- und Mittel zur Ausarbeitung und Übertragung von Bestätigungsmeldungen des Kartenlesers nach der Ausführung von Befehlen, die von der Chipkarte in Kartenmeldungen empfangen worden sind,
während die Chipkarte (4) aufweist:
- Mittel zur Initialisierung, die beim Einschalten der Chipkarte (4) aktiviert werden und dem Kartenleser (1) eine erste Kartenmeldung zur Verfügung stellen,
- Mittel zur Erkennung einer Anfrage nach Zurverfügungstellung einer Kartenmeldung des Kartenlesers (1) und zur Übertragung der Kartenmeldung an den Kartenleser (1) als Antwort auf eine solche Anfrage zur Zurverfügungsstellung einer Kartenmeldung,
- Mittel zum Erkennen einer Erklärung der Bestätigung und der Verarbeitung der zugeordenten Bestätigungsmeldung, die vom Kartenleser (1) kommt,
- und Mittel zur Ausführung des Transaktions-Bearbeitungsprogramms, die die Befehle und Daten der Kartenmeldungen im Rythmus der Anfragen nach Zurverfügungstellung einer Kartenmeldung und der vom Kartenleser (1) ausgesendeten Bestätigungserklärungen abarbeiten.

2. System nach Anspruch 1, dadurch gekennzeichnet, daß die Mittel zur Ausführung des Transaktionsprogramms folgende Befehle erarbeiten:
- Anfrage, eine für den Operator bestimmte Meldung optisch anzuzeigen,
- Anfrage nach Auswahl eines Menüs,
- Anfrage nach Erfassung eines Netzes,
- Anfrage nach Anzeige eines Netzes oder eines Feldes,
- Anfrage nach Ausführung einer Steuerung durch die Mittel zum Empfang und zur Bearbeitung von Kartenmeldungen des Kartenlesers (1),
- Anfrage nach Speicherung einer Datei,
- Anfrage nach externer Authentifizierung,
- Chiffrieranfrage,
- Dechiffrieranfrage,
- Anfrage nach der Signatur einer Datei,
- Anfrage nach Installation eines Programms,
- Anfrage nach Ausführung eines vorher installierten Programms.

3. System nach Anspruch 1, dadurch gekennzeichnet, daß die Mittel zur Erarbeitung einer Bestätigungsmeldung des Kartenlesers (1) Bestätigungsmeldungen für folgenden Aktionen erarbeiten:
- Auswahl eines Menüs,
- Erfassung eines Feldes,
- Antwort auf eine Anfrage nach Ausführung einer Steuerung durch die Mittel zum Empfang und zur Bearbeitung einer Kartenmeldung des Kartenlesers (1),
- Einführung einer Chipkarte (4) in den Kartenleser (1),
- Entnahme einer Chipkarte (4) aus dem Kartenleser (1),
- Sperrung der Tastatur,
- Authentifizierung des Kartenlesers (1),
- Anfrage nach Dechiffrierung,
- Bestätigung einer Installation,
- Anfrage nach einer asynchronen Verbindung.

4. System nach Anspruch 1, dadurch gekennzeichnet, daß die Mittel des Kartenlesers (1), die alternativ und wiederholt eine Anfrage nach Zurverfügungstellung einer Kartenmeldung und eine Erklärung über die Bestätigung in Verbindung mit einer Bestätigungsmeldung durch den Kartenleser (1) erzeugen, eine Anfrage nach Zurverfügungstellung einer Kartenmeldung in Form einer Datenfolge aus mehreren aufeinanderfolgenden Feldern erarbeiten, zu der ein Feld, das der Identifizierung einer Steuerung dient, und ein Feld gehören, das eine Erklärung über die Länge der erwarteten Kartenmeldung enthält.

5. System nach Anspruch 1, dadurch gekennzeichnet, daß die Mittel des Kartenlesers (1), die alternativ und wiederholt eine Anfrage nach Zurverfügungstellung einer Kartenmeldung und eine Erklärung über die Bestätigung in Verbindung mit einer Bestätigungsmeldung durch den Kartenleser (1) erzeugen, eine Bestätigungserklärung in Form einer Datenfolge erarbeiten, die mehrere aufeinanderfolgende Felder enthält, zu denen ein Feld zur Identifizierung der Steuerungen und ein Feld gehören, das eine Erklärung über die Länge der zugeordneten Bestätigungsmeldung enthält.

## Claims

1. System for smart IC cards, including at least one IC card reader (1) provided with IC card supply means which are activated by the connection of an IC card, and an IC card (4) which stores a transaction management program (43) in its memory, the IC card reader (1) including:
- means which alternately and repetitively generate, for the purpose of being sent to a connected IC card (4), on the one hand a request for provision of a packet of instructions and data developed in the said IC card (4), this being referred to as the "card message", and, on the other hand, a report declaration associated with a report message regarding the execution by the reader (1) of instructions previously received in card messages from the said IC card (4), the report declaration and the report message being referred to as the "reader report",
- means for receiving and processing the card message delivered by the said IC card (4) subsequent to a request to provide a card message, and
- means for developing and transmitting reader report messages subsequent to execution of instructions received from the said IC card (4) in card messages,
and the said IC card (4) including:
- initialisation means which are activated when the said IC card (4) is powered up and cause the said reader (1) to be provided with a first card message,
- means for recognising a card-message provision request originating from the said reader (1), and for transmitting a card message to the said reader (1) in response to such a card-message provision request,
- means for recognising a report declaration and for processing the associated report message coming from the said reader (1), and
- means for executing the said transaction management program, developing the instructions and data of the card messages at the rate of the card-message provision requests and the report declarations sent by the said reader (1).

2. System according to claim 1, characterised in that the means for executing the said transaction management program develop instructions of:
- request to display a message intended for an operator,
- request to select a menu,
- request to enter a grid,
- request to display a grid or a field,
- request to execute a command by the card-message reception and processing means of the reader (1),
- request to record a file,
- request for external authentication,
- request for ciphering,
- request for deciphering,
- request for a file signature,
- request to install a program,
- request to execute a previously installed program.

3. System according to claim 1, characterised in that the said means for developing a report message of the said reader (1) develop report messages regarding:
- menu selection,
- field entry,
- response to a request to execute a command by the card-message reception and processing means of the reader (1),
- insertion of an IC card (4) into the reader (1),
- withdrawal of an IC card (4) from the reader (1),
- inactivity of the keyboard,
- authentication of the reader (1),
- a request for deciphering,
- an install report,
- a request for an asynchronous link.

4. System according to claim 1, characterised in that the means of the said reader (1) which alternately and repetitively generate a request for provision of a card message and a report declaration associated with a report message on the part of the reader (1) develops a card-message provision request in the form of a digital sequence having a plurality of successive fields, including a command identification field and a field for declaring the length of the expected card message.

5. System according to claim 1, characterised in that the means of the said reader (1) which alternately and repetitively generate a request for the provision of a card message and a report declaration associated with a report message on the part of the reader (1) develops a report declaration in the form of a digital sequence having a plurality of successive fields, including a command identification field and a field for declaring the length of the associated report message.
